(19) Europäisches Patentamt
European Patent Office
Office européen des brevets

(11) **EP 2 200 881 B1**

(12) **EUROPÄISCHE PATENTSCHRIFT**

(45) Veröffentlichungstag und Bekanntmachung des Hinweises auf die Patenterteilung:
**16.03.2011 Patentblatt 2011/11**

(21) Anmeldenummer: **08804091.0**

(22) Anmeldetag: **12.09.2008**

(51) Int Cl.:
**B60W 30/08** *(2006.01)*    **B60W 30/16** *(2006.01)*

(86) Internationale Anmeldenummer:
**PCT/EP2008/062126**

(87) Internationale Veröffentlichungsnummer:
**WO 2009/049976 (23.04.2009 Gazette 2009/17)**

(54) **VERFAHREN ZUR SCHÄTZUNG DER RELATIVBEWEGUNG VON VIDEO-OBJEKTEN UND FAHRERASSISTENZSYSTEM FÜR KRAFTFAHRZEUGE**

METHOD FOR ESTIMATING THE RELATIVE MOVEMENT OF VIDEO OBJECTS AND DRIVER ASSISTANCE SYSTEM FOR MOTOR VEHICLES

PROCÉDÉ POUR ÉVALUER LE DÉPLACEMENT RELATIF D'OBJETS VIDÉO ET SYSTÈME D'ASSISTANCE À LA CONDUITE POUR DES VÉHICULES AUTOMOBILES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.10.2007 DE 102007049706**

(43) Veröffentlichungstag der Anmeldung:
**30.06.2010 Patentblatt 2010/26**

(73) Patentinhaber: **Robert Bosch GmbH**
**70442 Stuttgart (DE)**

(72) Erfinder:
• **FOCKE, Thomas**
**31180 Ahrbergen (DE)**
• **HILSEBECHER, Joerg**
**31135 Hildesheim (DE)**
• **ZENDER, Arne**
**31162 Bad Salzdetfurth (DE)**
• **MUELLER-FRAHM, Mario**
**30519 Hannover (DE)**
• **SCHOEBERL, Thomas**
**31139 Hildesheim (DE)**
• **SIMON, Andreas**
**31135 Hildesheim (DE)**

(56) Entgegenhaltungen:
DE-A1- 10 351 778      DE-A1- 19 712 017
DE-A1-102004 046 101   DE-A1-102005 000 651
DE-A1-102005 045 017   DE-A1-102006 036 921

**Beschreibung**

Stand der Technik

Die Erfindung betrifft ein Verfahren zur Schätzung der Relativbewegung von Video-Objekten in einem mit einem Videosystem ausgerüsteten Fahrerassistenzsystem für Kraftfahrzeuge, bei dem mindestens ein die Bewegung des Objekts kennzeichnender Parameter anhand der scheinbaren Bewegung des Objekts im Videobild berechnet wird.

Weiterhin befaßt sich die Erfindung mit einem Fahrerassistenzsystem, in dem das Verfahren implementiert ist.

Beispiele für Fahrerassistenzsysteme, bei denen die Erfindung anwendbar ist, sind etwa sogenannte prädiktive Sicherheitssysteme (PSS; Predictive Safety System) sowie automatische Abstandsregelsysteme (ACC, Adaptive Cruise Control). Bei beiden Typen von Fahrerassistenzsystemen ist mindestens ein Objektortungssystem, beispielsweise ein Radarsystem oder ein videobasiertes System dazu vorgesehen, das Umfeld des mit dem Assistenzsystem ausgerüsteten Fahrzeugs zu überwachen und Objekte im Umfeld des Fahrzeugs, insbesondere vorausfahrende Fahrzeuge und sonstige Hindernisse zu orten.

Bei einem PSS-System wird anhand der Ortungsdaten "vorausschauend" berechnet, ob es zu einer Kollision mit einem Objekt kommen wird, und bei akuter Kollisionsgefahr wird ein Warnsignal ausgegeben. Dieses Warnsignal wird beispielsweise in ein akustisches Signal umgesetzt, das den Fahrer auf die Gefahr aufmerksam machen soll. Es sind auch Systeme in Entwicklung, bei denen das Warnsignal unmittelbar einen automatischen Eingriff in die Längsführung des Fahrzeugs auslöst, beispielsweise eine Notbremsung, um die Kollision noch abzuwenden oder zumindest deren Folgen zu mildern.

Solche Systeme stellen jedoch sehr hohe Anforderungen an die Genauigkeit und Verläßlichkeit des Ortungssystems, da es andernfalls häufig zu Fehlauslösungen kommen kann, die ihrerseits eine erhebliche Gefahrenquelle darstellen können.

DE 10 2004 046 360 A1 beschreibt ein PSS-System, bei dem zur Bestimmung der Kollisionsgefahr die sogenannte "time to collision" vorausberechnet wird, d. h. die Zeit, die voraussichtlich noch bis zur Kollision mit dem Objekt vergehen wird, wenn sich die dynamischen Daten des eigenen Fahrzeugs und des georteten Objekts nicht ändern. Das PSS-System löst dann eine oder mehrere Aktionen zur Abwendung der Kollision oder zur Milderung der Kollisionsfolgen jeweils dann aus, wenn die "time to collision" einen für die betreffende Aktion vorgesehenen Schwellenwert unterschreitet.

WO 2005/098782 A1 beschreibt ein Verfahren, mit dem bei einem videobasierten System die "time to collision" anhand der Änderung des Skalenfaktors eines erkannten Objekts von Meßzyklus zu Meßzyklus berechnet werden kann, ohne daß die Objektabstände zu den jeweiligen Meßzeitpunkten genau bekannt sein müssen.

Die Auswertung von Videobildern im Zusammenhang mit der Objektortung in Fahrerassistenzsystemen wird allgemein auch in DE 10 2004 047 475 A1 beschrieben.

Die Verläßlichkeit der Objektortung kann dadurch verbessert werden, daß zwei unabhängig voneinander arbeitende Ortungssysteme vorgesehen werden, so daß eine gewisse Redundanz erreicht wird. In dem Zusammenhang wird in der älteren Patentanmeldung DE 10 2007 018 470 vorgeschlagen, die time to collision zum einen mit Hilfe eines Videosystems und zum anderen unabhängig davon mit Hilfe eines Radarsensors zu bestimmen und dann die so erhaltenen Werte miteinander abzugleichen.

Für die Bestimmung oder Schätzung der time to collision anhand der Videodaten werden bisher sogenannte Einfachpixelgenaue Verfahren eingesetzt, bei denen die Bewegungen der Objektränder im Videobild verfolgt werden, so daß die Meßgenauigkeit durch die Auflösung des Videobildes begrenzt ist.

In der DE 10 2004 046 101 A1 wird ein Verfahren zur Früherkennung von Fahrzeugkollisionen gelehrt, das auf Basis einer abgeschätzten Zeitdauer bis zum Aufprall und einer ermittelten Kollisionsgefährdung ab einem bestimmten Gefährdungsgrad Kollisionsfolgen vermindernde Maßnahmen einleitet. Videodaten aus einem Kamerasystem werden mittels einer Flussfeldberechnung und Field-of-expansion-Bestimmung bearbeitet, Objekte extrahiert, segmentiert und somit die Bewegungsparameter bestimmt und in Zusammenhang mit der Time to Collision der Gefahrenlevel ermittelt.

Die DE 103 51 778 A1 lehrt, Objekte, die mittels bildbasierender Systeme erkannt werden, in zeitlich aufeinander folgenden Bilddatensätzen zu verfolgen, wobei miteinander korrespondierende Bildpunkte bzw. Bildbereiche identifiziert werden. Auch bei zeitgleich aufgenommenen Bildern einer Stereobildverarbeitung lehrt die Schrift das Tracking, indem die zu vergleichenden Bilddatensätze mit einem Signaturoperator transformiert werden, um später mittels Korrespondenzanalyse gleiche Objekte in verschiedenen Bilddatensätzen zu erkennen.

Die DE 10 2005 045 017 A1 zeigt ein System, welches das Vorfeld eines Fahrzeugs erfasst und eine Anfahrfreigabe ausgibt, wenn die Verkehrssituation ein Anfahren erlaubt. Hierbei werden insbesondere Merkmale ermittelt, die für eine hindernisfreie Fahrbahn charakteristisch sind.

Offenbarung der Erfindung

Aufgabe der Erfindung ist es, ein Verfahren und ein Fahrerassistenzsystem der eingangs genannten Art anzugeben, mit denen eine höhere Genauigkeit bei der Schätzung der Relativbewegungen anhand der Videodaten erreichbar ist.

Diese Aufgabe wird erfindungsgemäß dadurch gelöst, daß der die Bewegung kennzeichnende Parameter anhand des über die Fläche des Objekts im Videobild integrierten optischen Flusses berechnet wird.

Unter dem "optischen Fluß" versteht man in der Technik der digitalen Bildverarbeitung ein Vektorfeld, das für jedes Pixel die zweidimensionale Bewegung des entsprechenden Bildpunktes in einer Bildsequenz angibt. Unter der (in der Regel zumindest näherungsweise gültigen) Annahme, daß die einzelnen Bildpunkte im Laufe der Zeit nur ihre Position im Bild aber nicht ihre absolute Helligkeit ändern, erfüllen die zeitlichen und räumlichen Ableitungen der Helligkeiten der Bildpunkte eine Kontinuitätsgleichung, die mit bekannten Verfahren die Berechnung des optischen Flusses erlaubt (z.B. Berthold K.P. Horn und Brian G. Schunck: Determining Optical Flow", Artificial Intelligence, Band 17, Nr. 1 bis 3, Seiten 185-203, 1981).

Der Vorteil des erfindungsgemäßen Verfahrens besteht darin, daß man bei der Schätzung der Bewegung nicht auf die Ortsveränderungen der Ränder des Objekts angewiesen ist, sondern auch Bildpunkte innerhalb der scheinbaren Fläche des Objekts zur Charakterisierung der Bewegung beitragen. Dadurch ist es möglich, die Beschränkungen der Genauigkeit zu überwinden, die sich bisher daraus ergeben, daß die Orte der Ränder des Objekts nur auf ein Pixel genau bestimmt werden können. Das erfindungsgemäße Verfahren erlaubt eine Berechnung der die Bewegung kennzeichnenden Parameter mit einer Genauigkeit, die einer weit höheren Bildauflösung entspricht und um so besser ist, je strukturreicher das betrachtete Objekt ist.

Vorteilhafte Ausgestaltungen ergeben sich aus den Unteransprüchen.

In einer speziellen Ausführungsform erlaubt die Erfindung eine genaue Berechnung der time to collision anhand der Videodaten. Gemäß einer Weiterbildung kann darüber hinaus eine relativ genaue Schätzung der räumlichen Bewegung des Objekts erhalten werden. Dies ermöglicht zum einen eine bessere Abschätzung, ob es tatsächlich zu einer Kollision kommen wird oder ob das eigene Fahrzeug das Objekt ohne Kollision passieren wird. Darüber hinaus wird bei Objekten, die zur Mittelachse des eigenen Fahrzeugs seitlich versetzt sind, eine Umrechnung der time to collision, die nur auf der Grundlage der Bewegung in Längsrichtung des eigenen Fahrzeugs berechnet wurde, in die "radiale" time to collision möglich, die der Änderung des tatsächlichen Abstands des Objekts entspricht, wie sie von einem Radarsensor gemessen würde. Dies erlaubt einen genaueren Abgleich der Video- und der Radardaten.

Kurze Beschreibung der Zeichnungen

Ein Ausführungsbeispiel der Erfindung ist in den Zeichnungen dargestellt und in der nachfolgenden Beschreibung näher erläutert.

Es zeigen:

Fig. 1          ein Blockdiagramm eines Fahrerassistenzsystems;

Fig. 2          eine Seitenansicht eines mit dem Fahrerassistenzsystem ausgerüsteten Fahrzeugs und eines vorausfahrenden Fahrzeugs;

Fig. 3 und 4    Videobilder eines bildbasierten Objektortungssystems;

Fig. 5          eine Skizze zur Illustration eines Verfahrens zur Bestimmung einer "time to collision" anhand der Videobilder gemäß Fig. 3 und 4;

Fig. 6          ein Diagramm, das die Auswertung eines optischen Flusses in den Videobildern illustriert;

Fig. 7          ein Diagramm zur Erläuterung eines Verfahrens, mit dem die räumliche Bewegung eines Video-Objekts geschätzt wird, und

Fig. 8          ein Diagramm zur Illustration unterschiedlicher Vektorzerlegungen der Objektgeschwindigkeit.

Ausführungsformen der Erfindung

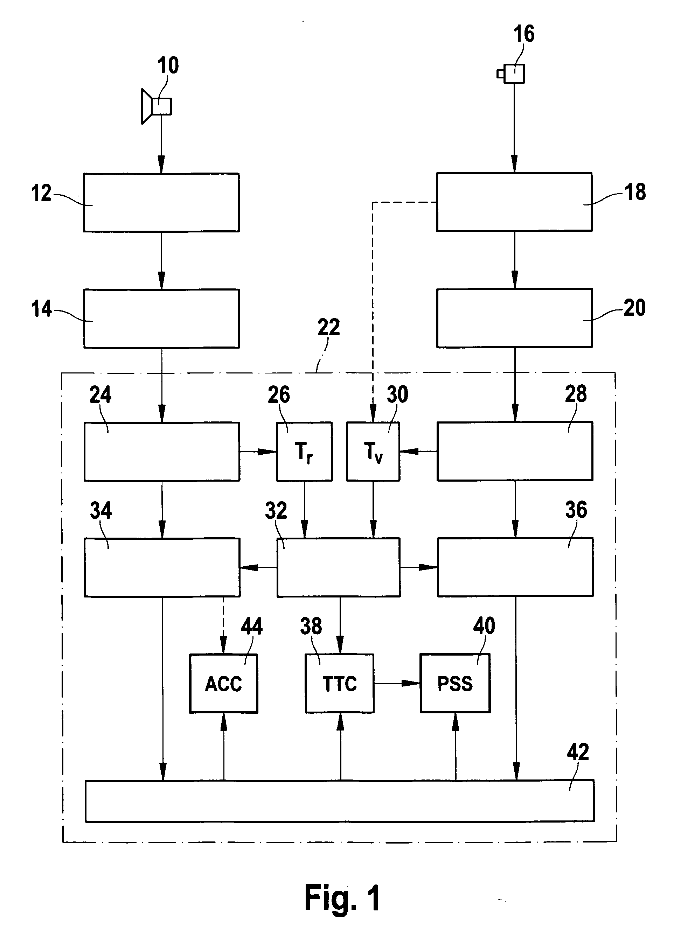

In Fig. 1 ist ein Fahrerassistenzsystem für ein Kraftfahrzeug, in diesem Beispiel eine Kombination aus einem Abstandsregelsystem (ACC) und einem prädiktiven Sicherheitssystem (PSS), als Blockdiagramm dargestellt. Das System umfaßt zwei unabhängig voneinander arbeitende Objektortungssysteme zur Erfassung des Vorfelds des mit dem Fahrerassistenzsystems ausgerüsteten Fahrzeugs.

Ein erstes Objektortungssystem wird durch einen Radarsensor 10, im gezeigten Beispiel ein FMCW-Radar, gebildet. Die empfangenen Radarsignale werden in einer Auswertungsstufe 12 vorverarbeitet, so daß man Ortungsdaten 14 für eines oder mehrere geortete Objekte erhält. Jedes Objekt wird durch einen Satz von Ortungsdaten beschrieben, der den Abstand, die Relativgeschwindigkeit und den Azimutwinkel des Objekts umfaßt. Die Radarmessungen erfolgen zyklisch mit einer Periode in der Größenordnung von 100 ms, so daß die Ortungsdaten 14 in kurzen Intervallen aktualisiert werden.

Als zweites Objektortungssystem ist ein monokulares Videosystem mit einer vorn im Fahrzeug eingebauten, nach vorn gerichteten Videokamera 16 und einem zugehörigen Bildverarbeitungsmodul 18 vorgesehen. Das Bildverarbeitungsmodul 18 wertet die periodisch von der Videokamera 16 aufgenommenen digitalen Bilder aus und erkennt in diesen Bildern vordefinierte Objektklassen, beispielsweise Fahrzeuge, Personen, Leitplanken, Fahrbahnmarkierungen und dergleichen. Im Rahmen der Erfindung sind vor allem Objekte von Bedeutung, die als potentielle Hindernisse in Frage kommen, also insbesondere vorausfahrende (oder stehende) Fahrzeuge. Für diese Objekte liefert das Bildverarbeitungsmodul 18 Ortungsdaten 20, die für jedes geortete Objekt den Abstand, die laterale Position (Azimutwinkel) und die laterale Ausdehnung des Objekts (z. B. Fahrzeugbreite) umfassen.

Die Ortungsdaten 14 und 20, die mit den verschiedenen Objektortungssystemen gewonnen wurden, sind unabhängig voneinander, beschreiben jedoch zum Teil identische oder äquivalente physikalische Größen, beispielsweise den Objektabstand sowie die laterale Position des Objekt, die sich aus dem vom Radarsensor gemessenen Abstand und Azimutwinkel berechnen läßt.

Kernstück des Fahrerassistenzsystems ist ein elektronisches Datenverarbeitungssystem 22, das durch einen Rechner und zugehörige Software gebildet wird und die von den beiden Objektortungssystemen gelieferten Ortungsdaten 14, 20 auswertet. Ein Tracking-Modul 24 dient dazu, die vom Radarsensor 10 in aufeinanderfolgenden Meßzyklen gelieferten Ortungsdaten 14 in bekannter Weise miteinander abzugleichen, um so die in einem Zyklus georteten Objekte mit den im vorherigen Zyklus georteten Objekten zu identifizieren und die Bewegungen der Objekte zu verfolgen. Ein ttc-Modul 26 berechnet anhand der Daten des Tracking-Moduls 24 eine auf den Radardaten basierende "time to collision", die hiermit $T_r$ bezeichnet ist und für jedes geortete Objekt die vorausberechnete Zeit angibt, die bis zur Kollision des eigenen Fahrzeugs mit dem betreffenden Objekt noch vergehen würde, sofern man unterstellt, daß sich die dynamischen Daten des eigenen Fahrzeugs und des Objekts in der Zwischenzeit nicht ändern.

Es versteht sich, daß diese time to collision in erster Linie für Objekte berechnet wird, die sich innerhalb des voraussichtlichen Fahrkorridors des eigenen Fahrzeugs befinden, doch läßt sich diese time to collision auch für abseits des Fahrkorridors gelegene Objekte berechnen, indem man sich auf eine eindimensionale Betrachtung beschränkt, bei der nur die Koordinaten in Längsrichtung des Fahrzeugs berücksichtigt werden.

Auch die Ortungsdaten 20 des Videosystems werden periodisch aktualisiert, mit einer Periode, die nicht notwendigerweise mit der Meßperiode des Radarsensors 10 identisch sein muß. Ein weiteres Tracking-Modul 28 dient deshalb dazu, anhand der periodisch eintreffenden Ortungsdaten 20 die georteten Video-Objekte zu verfolgen. Analog zu dem ttc-Modul 26 ist ein weiteres ttc-Modul 30 dazu vorgesehen, eine time to collision $T_v$ für jedes geortete Video-Objekt zu berechnen. Diese Berechnung erfolgt im gezeigten Beispiel ebenfalls anhand der Daten des zugehörigen Tracking-Moduls 28, kann jedoch wahlweise oder zusätzlich auch anhand der Daten des Bildverarbeitungsmoduls 18 erfolgen. Es ist auch denkbar, daß die Funktion des ttc-Moduls 30 in das Bildverarbeitungsmodul 18 integriert ist oder umgekehrt das Bildverarbeitungsmodul 18 in das Datenverarbeitungssystem 22 integriert ist.

In einem Vergleichsmodul 32 werden die von den beiden ttc-Modulen 26, 30 berechneten Meßgrößen $T_r$ und $T_v$, die auf unabhängig voneinander erhobenen Ortungsdaten basieren, miteinander verglichen. Wenn diese beiden Meßgrößen innerhalb bestimmter Genauigkeitsgrenzen übereinstimmen, so kann davon ausgegangen werden, daß die betreffenden Objekte, die einerseits durch die Ortungsdaten 14 und andererseits durch die Ortungsdaten 20 repräsentiert werden, ein und demselben physikalischen Objekt entsprechen. Diese Information wird in einem Plausibilisierungsmodul 34 dazu benutzt, die vom Tracking-Modul 24 verfolgten Radar-Objekte zu plausibilisieren, d. h., wenn für ein gegebenes Objekt eine Übereinstimmung der beiden Meßgrößen für die time to collision festgestellt wird, so bedeutet dies, daß die Objektortung mit Hilfe des Radarsensors 10 durch die Objektortung mit Hilfe des Videosystems bestätigt wurde, und man erhält somit erhöhte Gewißheit, daß es sich bei dem betreffendes Objekt um ein reales Objekt handelt.

Diese Plausibilisierung kann sich auch auf die Objektklassifizierung beziehen. Beispielsweise besteht bei Radarsystemen, insbesondere bei der Ortung von unbeweglichen Objekten, das Problem, daß sich das Radarecho eines echten Hindernisses, etwa eines stehenden Fahrzeugs, kaum von Radarechos unterscheiden läßt, die von irrelevanten Objekten wie beispielsweise Kanaldeckeln oder sonstigen kleinen Objekten auf der Fahrbahn ausgehen. Das Videosystem wird dagegen von vornherein nur die vordefinierten Objektklassen erkennen und wird deshalb Kanaldeckel und dergleichen ignorieren. Die vom Vergleichsmodul 32 gelieferte Information kann deshalb auch zur Bestätigung dienen, daß es sich bei dem vom Radarsensor georteten stehenden Objekt um ein echtes Hindernis handelt.

Ebenso kann im Plausibilisierungsmodul 34 auch eine gewisse Präzisierung der vom Radarsensor gelieferten Ortungsdaten erfolgen. Beispielsweise läßt sich mit Hilfe des Radarsensors die laterale Ausdehnung eines Objekts nur ungefähr anhand der Stärke des Radarechos und/oder der Verteilung der Azimutwinkel abschätzen. Ein sehr ausgedehntes Objekt, beispielsweise ein vorausfahrender LKW, kann auch mehrere Radarechos erzeugen, die von verschiedenen Reflexpunkten am LKW resultieren. Allein aufgrund der Radardaten ist es dann oft schwierig zu entscheiden, ob zwei Radarechos zu demselben Objekt oder zu verschiedenen Objekten gehören. Wenn nun für zwei Radarechos vom ttc-Modul 26 dieselbe time to collision berechnet wird, das Vergleichsmodul 32 aber meldet, daß das Videosystem nur ein einziges Objekt mit dieser time to collision geortet hat, so ist klar, daß die beiden Radarechos von demselben Objekt stammen. Auf diese Weise kann im Plausibilisierungsmodul 34 die Information über die laterale Ausdehnung des Objekts präzisiert werden.

Auch dem Tracking-Modul 28 für die Video-Objekte ist ein Plausibilisierungsmodul 36 nachgeschaltet, mit dem auf analoge Weise die Video-Objekte bei Übereinstimmung der beiden Meßgrößen $T_r$ und $T_v$ plausibilisiert werden.

Das Vergleichsmodul 32 liefert bei Übereinstimmung der beiden Meßgrößen $T_r$ und $T_v$ zugleich einen Parameter TTC, der den beiden übereinstimmenden Meßgrößen entspricht. Dieser Parameter TTC wird von einem TTC-Fusionsmodul 38 als "bestätigte" time to collision an ein PSS-Modul 40 übermittelt, d. h., an den Teil des Fahrerassistenzsystems, der für die prädiktive Sicherheitsfunktion verantwortlich ist.

Wenn nun der kleinste der in dieser Weise innerhalb eines Meßzyklus erhaltenen Parameter TTC einen im PSS-Modul 40 festgelegten Schwellenwert unterschreitet, so löst dies eine entsprechende Aktion des PSS-Systems aus, beispielsweise die Ausgabe eines Warnsignals an den Fahrer und/oder einen Eingriff in die Längsführung des Fahrzeugs. Dies ermöglicht eine sehr frühzeitige Ausgabe des Warnsignals, ohne daß die Ergebnisse der Plausibilisierungsprozeduren in den Plausibilisierungsmodulen 34 und 36 abgewartet werden müssen.

Selbstverständlich sollte der Parameter TTC nur für solche Objekte übergeben werden, die von beiden Objektortungssystemen innerhalb des voraussichtlichen Fahrkorridors des eigenen Fahrzeugs verortet wurden. Wenn die ttc-Module 26 und 30 auch Meßgrößen $T_r$ und $T_v$ für Objekte berechnen, die außerhalb des voraussichtlichen Fahrkurses liegen, so kann zu diesem Zweck über das Vergleichsmodul 32 zusammen mit der Meßgröße ein Flag übermittelt werden, das angibt, ob das Objekt innerhalb oder außerhalb des Fahrkorridors liegt.

In einem Datenfusionsmodul 42 werden die in den Plausibilisierungsmodulen 34 und 36 plausibilisierten und gegebenenfalls präzisierten Ortungsdaten der Objekte miteinander fusioniert, d. h., es wird nun für jedes geortete Objekt ein einheitlicher Datensatz gebildet, der den Ort, die Relativgeschwindigkeit, die laterale Position und die laterale Ausdehnung des Objekts angibt. Bei dieser Datenfusion wird die jeweilige Meßgenauigkeit der Objektortungssysteme berücksichtigt. So wird beispielsweise der Wert für den Objektabstand maßgeblich durch die Daten des Radarsensors 10 bestimmt sein, während bei der Fusion der Daten für diese laterale Position und die laterale Ausdehnung des Objekts die Daten des Videosystems ein höheres Gewicht erhalten werden.

Anhand der in dieser Weise präzisierten Daten kann unter anderem auch ein neuer Wert für den Parameter TTC, also die time to collision, berechnet werden. Bei Annahme einer konstanten Relativgeschwindigkeit wird dieser Parameter TCC der Quotient aus dem Abstand und der Relativgeschwindigkeit sein, die im Datenfusionsmodul 42 berechnet wurden. Auf dieser Stufe ist es jedoch auch möglich, etwaige Beschleunigungen des eigenen Fahrzeugs oder des georteten Objekts zu berücksichtigen und in die Zukunft zu extrapolieren, so daß man einen genaueren Schätzwert für die time to collision erhält. Im TTC-Fusionsmodul 38 wird dann dieser genauere Wert mit dem vom Vergleichsmodul 32 gelieferten vorläufigen Wert fusioniert, oder er ersetzt den vorläufigen Wert, so daß das PSS-Modul 40 mit einem genaueren Schätzwert für die time to collision arbeiten kann.

Für die Zwecke der Objektplausibilisierung werden dagegen bei diesem Ausführungsbeispiel die Meßgrößen $T_r$ und $T_v$ nur in erster Näherung berechnet, das heißt, unter Annahme konstanter Geschwindigkeiten. Das ergibt zwar für die tatsächliche time to collision nur relativ ungenaue Schätzwerte, vereinfacht jedoch die Berechnungen und liefert für die Objektplausibilisierung ein Verfahren, das nicht weniger empfindlich ist als bei Verwendung höherer Näherungen.

Da im Datenfusionsmodul 42 auch die laterale Position und die Lateralausdehnung des Objekts genauer bestimmt werden, können diese Daten an das PSS-Modul übergeben werden, so daß dann in diesem Modul aufgrund der genaueren Daten erneut entschieden werden kann, ob eine Möglichkeit besteht, das Objekt zu umfahren, und in dem Fall können einige oder alle der vom PSS-Modul vorgesehenen Aktionen ausgesetzt werden.

Eine zweckmäßige Ausführungsform kann darin bestehen, daß das PSS-Modul 40 einen Warnhinweis an den Fahrer ausgibt, sobald ein vom Vergleichsmodul 32 gelieferter Parameter TTC unter dem betreffenden Schwellenwert liegt, daß jedoch automatische Eingriffe in die Längsführung des Fahrzeugs erst auf der Grundlage der genaueren Daten des Datenfusionsmoduls 42 erfolgen.

Die vom Datenfusionsmodul 42 berechneten genaueren Ortungsdaten der Objekte, insbesondere für das unmittelbar vorausfahrende Fahrzeug, werden auch an ein ACC-Modul 44 übergeben, das automatisch den Abstand zum vorausfahrenden Fahrzeug regelt. In einer modifizierten Ausführungsform kann das ACC-Modul 44 die Ortungsdaten jedoch auch direkt vom Plausibilisierungsmodul 34 erhalten, wie in Fig. 1 durch einen gestrichelten Pfeil angedeutet wird. In dem Fall wird das Videosystem nur zu Objektplausibilisierung benutzt, während die Abstandsregelung ansonsten allein anhand der Daten des Radarsensors 10 erfolgt.

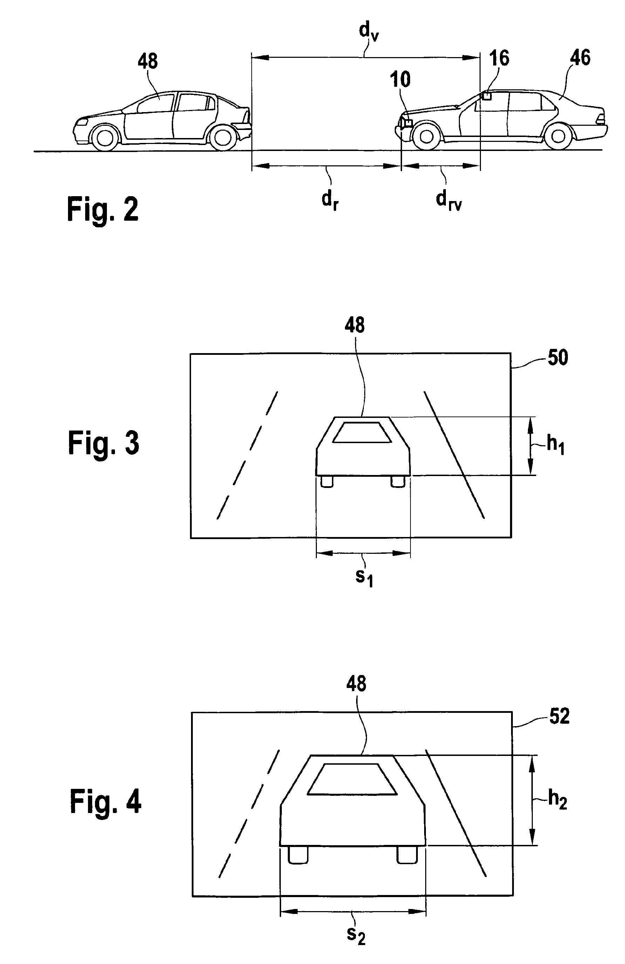

In Fig. 2 ist ein Fahrzeug 46, das mit dem Fahrerassistenzsystem gemäß Fig. 1 ausgerüstet ist, in einer Seitenansicht dargestellt. Weiterhin ist ein vorausfahrendes Fahrzeug (Objekt) 48 dargestellt. Für dieses vorausfahrende Fahrzeug 48 mißt der Radarsensor 10 den Abstand $d_r$. Das Videosystem mißt für dasselbe Fahrzeug 48 den Abstand $d_v$, der im allgemeinen etwas größer sein wird, weil die Videokamera 16 axial versetzt zu dem Radarsensor 10 im Fahrzeug 46 eingebaut sein wird. Der Abstand zwischen dem Radarsensor 10 und dem Videosensor 16 in Längsrichtung des Fahrzeugs 46 ist in Fig. 2 mit $d_{rv}$ bezeichnet. Dieser Abstand muß bei der Datenfusion und auch bei der Berechnung der Meßgrößen $T_r$ und $T_v$ für die time to collision berücksichtigt werden. Wenn das Fahrzeug 48 seitlich versetzt zu dem Fahrzeug 46 fährt, sollte außerdem berücksichtigt werden, daß $d_v$ stets nur die Projektion des Abstandsvektors auf die Längsachse des Fahrzeugs 46 (optische Achse der Videokamera) angibt, während der Radarsensor den tatsächlichen radialen Abstand $d_r$ mißt.

Anhand der Figuren 3 bis 5 soll nun zunächst erläutert werden, wie anhand der Daten des Videosystems die Meßgröße $T_v$ für die time to collision berechnet wird. Fig. 3 zeigt ein Bild 50, das zu einem bestimmten Zeitpunkt mit der Videokamera 16 aufgenommen wird. In diesem Bild ist die Silhouette des vorausfahrenden Fahrzeugs 48 zu erkennen. Durch digitale Bildverarbeitung kann aus dem Bild eine scheinbare Breite $s_1$ des vorausfahrenden Fahrzeugs 48 extrahiert werden.

Fig. 4 zeigt ein Bild 52, das zu einem etwas späteren Zeitpunkt, etwa einen Video-Meßzyklus später, von der Videokamera 16 aufgenommen wird. Es sei hier angenommen, daß die Relativgeschwindigkeit des Fahrzeugs 48 negativ ist, d. h., der Abstand zwischen den Fahrzeugen 48 und 46 nimmt ab. In dem Bild 52 erscheint daher die Silhouette des Fahrzeugs 48 um einen gewissen Skalierungsfaktor vergrößert, da das Fahrzeug inzwischen näher gekommen ist. Die scheinbare Breite des Fahrzeugs 48 beträgt in diesem Fall $s_2$.

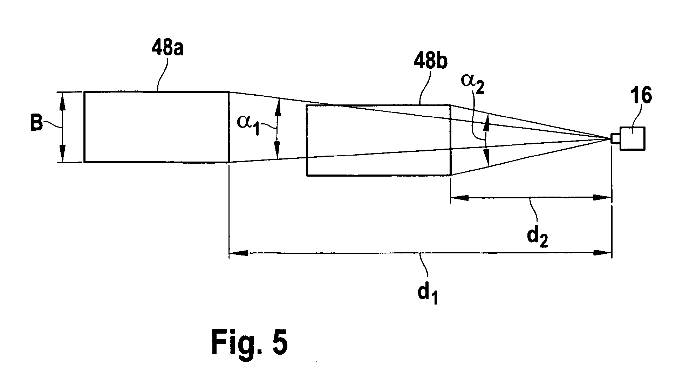

In Fig. 5 ist die Situation zu den Zeitpunkten, zu denen die Bilder 50 und 52 aufgenommen wurden, in einem schematischen Grundriß dargestellt. Die Position des Fahrzeugs 48 bei Aufnahme des Bildes 50 ist mit 48a bezeichnet, und die Position der Aufnahme des Bildes 52 mit 48b. Das Fahrzeug 48 hat die (konstante) Breite B. In der Position 48a entspricht diese Breite B einem Breitenwinkel $\alpha_1 = B/d_1$. Für die scheinbare Breite s1 des Fahrzeugs 48 im Bild 50 gilt demgemäß:

$$s_1 = k * \alpha_1 = k * B/d_1 \qquad\qquad (1)$$

mit einer geeigneten Maßstabskonstanten k für das Bild 50.

Entsprechend gilt für die Position 48b:

$$s_2 = k * \alpha_2 = k * B/d_2 \qquad\qquad (2)$$

Für die Abstände $d_1$ und $d_2$ gilt folglich

$$d_1 = k * B/s_1 \qquad\qquad (3)$$

und

$$d_2 = k * B/s_2 \qquad\qquad (4)$$

Die Meßgröße $T_v$ für die time to collision soll nun unter der vereinfachenden Annahme berechnet werden, daß sich die Videokamera 16 unmittelbar in Höhe der Vorderfront des Fahrzeugs 46 befindet. Weiterhin soll angenommen werden, daß die Relativgeschwindigkeit des Fahrzeugs 48 konstant ist. Die Anzahl der Meßzyklen, die noch mit der Videokamera 16 ausgeführt werden, bis die Kollision eintritt, ist dann gegeben durch: $d_2/(d_1 - d_2)$. Wenn die Dauer eines Meßzyklus $\Delta t$ beträgt, so gilt folglich für die time to collision:

$$T_v = \Delta t * d_2/(d_1 - d_2) \qquad (5)$$

Einsetzung von Gleichungen (3) und (4) ergibt:

$$T_v = \Delta t * (k * B/s_2)/(k * B/s_2) - (k * B/s_2)) \qquad (6)$$

Die beiden unbekannten Konstanten k und B kürzen sich heraus, und erweitern mit $s_1 * s_2$ ergibt:

$$T_v = \Delta t * s_1/(s_2 - s_1) \qquad (7)$$

So läßt sich die time to collision direkt aus der Änderung der Skalierung der Bilder 50, 52 berechnen, ohne daß die betreffenden Fahrzeugabstände bekannt sein müssen.

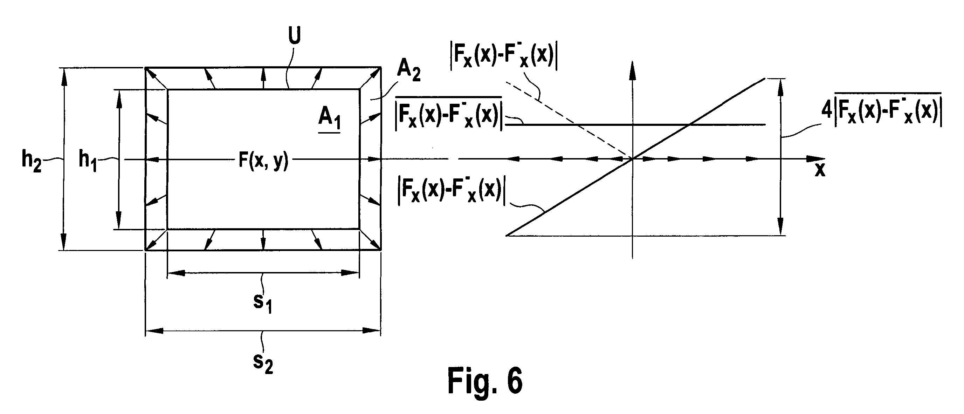

Die Größen $s_1$ und $s_2$ könnten im Prinzip direkt anhand der Grenzen der Silhouette des Fahrzeugs 48 in den Videobildern 50 und 52 berechnet werden. Die Genauigkeit wäre dann jedoch durch die begrenzte Auflösung des Videobildes auf ein Pixel beschränkt. Anhand von Fig. 6 soll nun ein Verfahren erläutert werden, das eine Bestimmung der time to collision mit höherer Genauigkeit erlaubt.

Im linken Teil der Fig. 6 ist die Silhouette des Fahrzeugs 48 in dem Videobild 50 vereinfacht als rechteckige Fläche $A_1$ dargestellt, und entsprechend ist die Silhouette in dem Videobild 52 als rechteckige Fläche $A_2$ dargestellt. Die in Fig. 6 gezeigten, radial von der Fläche $A_1$ ausgehenden Pfeile repräsentieren den optischen Fluß, d.h., ein Vektorfeld, das den Rand der Fläche $A_1$ in den Rand der Fläche $A_2$ überführt. Ebenso wird durch das Vektorfeld jedoch auch jeder Punkt innerhalb der Fläche $A_1$ in einen entsprechenden Punkt in der Fläche $A_2$ überführt.

In einer praktischen Ausführungsform kann das Bildverarbeitungsmodul 18 dazu ausgebildet sein, innerhalb jedes Bildzyklus den optischen Fluß für das gesamte Bild zu berechnen, und das ttc-Modul 30 kann den optischen Fluß dann auf den Flächen auswerten, die die georteten Objekte repräsentieren.

Der in Fig. 6 dargestellte Flächenzuwachs von der Fläche $A_1$ auf die Fläche $A_2$ kann als geschlossenes Linienintegral des optischen Flusses über den Rand U der Fläche $A_1$ geschrieben werden.

$$\Delta A = A_2 - A_1 = \oint \mathbf{F}(x, y)\, d\mathbf{U} \qquad (8)$$

Nach dem Gaußschen Satz ist dies Äquivalent zu:

$$\Delta A = A_2 - A_1 = \int_{A1} \mathbf{div}\, \mathbf{F}(x, y)\, dA \qquad (9)$$

Darin bezeichnet der Operator "div" die Summe aus der partiellen Ableitung der x-Komponente von F nach x ($\partial F_x/\partial x$) und der partiellen Ableitung der y-Komponente von F nach y ($\partial F_y/\partial y$).

Der optische Fluß innerhalb von Objektkonturen wird zum einen durch die relative Objektbewegung längs der optischen Achse und die damit einhergehende Skalierung hervorgerufen und zum anderen durch die transversale Komponente der Bewegung des Objekts relativ zur Kamera. Der durch diese letztere Transversalbewegung hervorgerufene optische Fluß ist über die gesamte Fläche des Objekts konstant. Im Gegensatz dazu muß der optische Fluß, der aus der Bewegung des Objekts längs der optischen Achse resultiert, im Mittel, d.h., integriert über die gesamte Fläche des Objekts, den Wert 0 haben, da diese Bewegung nur zu einer Skalierung des Bildes des Objekts führt, ohne die Lage des "Schwerpunkts" zu verändern. Man kann deshalb den der Longitudinalbewegung entsprechenden Anteil isolieren, indem man für jeden Bildpunkt innerhalb der Fläche $A_1$ von dem dort gemessenen Fluß $\mathbf{F}$ den über die gesamte

Fläche $A_1$ gebildeten Mittelwert $\overline{\mathbf{F}}$ subtrahiert.

Die so erhaltene, der Longitudinalbewegung entsprechende Komponente des optischen Flusses ist linear in x und in y. Dies ist im rechten Teil der Fig. 6 für die x-Komponente auf einer in x-Richtung durch die Mitte der Fläche $A_1$ gehenden Linie dargestellt. Aufgrund des linearen Verhaltens der Komponenten von **F** sind die partiellen Ableitungen, die in die Divergenz gemäß Gleichung (9) einfließen, konstant. Wie man aus dem rechten Teil der Fig. 6 abliest, gilt also z.B.

$$\int_{A1} \partial/\partial x \ (F_x(x,\ y))\ dA\ =\ 4\,|\,F_x(x)\ -\ \overline{F}_x(x)\,|\quad h_1 \tag{10}$$

und entsprechend:

$$\int_{A1} \partial/\partial y \ (F_y(x,\ y))\ dA\ =\ 4\,|\,F_y(y)\ -\ \overline{F}_y(y)\,|\quad s_1 \tag{11}$$

Insgesamt erhält man somit:

$$\Delta A\ =\ 4\ A_1\ ((\,|\,F_x\ -\ \overline{F}_x\,|\,)/s1\ +\ (\,|\,F_y\ -\ \overline{F}_y\,|\,)/h1) \tag{12}$$

und mit $F^* := 4\ ((\,|\,F_x\ -\ \overline{F}_x\,|\,)/s1\ +\ (\,|\,F_y\ -\ \overline{F}_y\,|\,)/h1):$

$$\Delta A\ =\ A_1\ *\ F^* \tag{13}$$

Es versteht sich, daß Formel (9) nicht nur für rechteckige Flächen $A_1$, $A_2$ sondern auch für beliebig geformte Objektsilhouetten gilt. Auf diese Weise ist es möglich, einfach durch Integration (Mittelwertbildung) des auf der Fläche der Objektsilhouette gemessenen optischen Flusses einen Wert für die Zunahme $\Delta A$ dieser Fläche innerhalb eines Bildaufnahmezyklus zu erhalten.

Überträgt man nun die Berechnung der time to collision $T_v$ gemäß Gleichung (7) von den eindimensionalen Objektabmessungen $s_1$, $s_2$ auf die Objektflächen $A_1$, $A_2$, so gelangt man schließlich zu der gesuchten time to collision $T_v$ in Abhängigkeit vom optischen Fluß $F^*$ und von der Zeitspanne $\Delta t$ zwischen zwei aufeinanderfolgenden Bildern:

$$T_v = \Delta t * (A_1)^{1/2} / ((A_2)^{1/2} - (A_1)^{1/2})$$

$$= \Delta t * (A_1)^{1/2} / ((A_1 + \Delta A)^{1/2} - (A_1)^{1/2})$$

$$= \Delta t * (A_1)^{1/2} / ((A_1 + A_1 * F^*)^{1/2} - (A_1)^{1/2})$$

$$= \Delta t * 1 / ((1 + F^*)^{1/2} - 1) \qquad (14)$$

Die Größe F* enthält darin mindestens ein Integral über den optischen Fluß innerhalb der Objektfläche und repräsentiert deshalb einen Mittelwert aus den scheinbaren Bewegungen einer sehr großen Anzahl von Bildpunkten. Auf diese Weise kann die Bewegung mit einer Auflösung erfaßt werden, die wesentlich höher ist als die tatsächliche Auflösung des Videobildes.

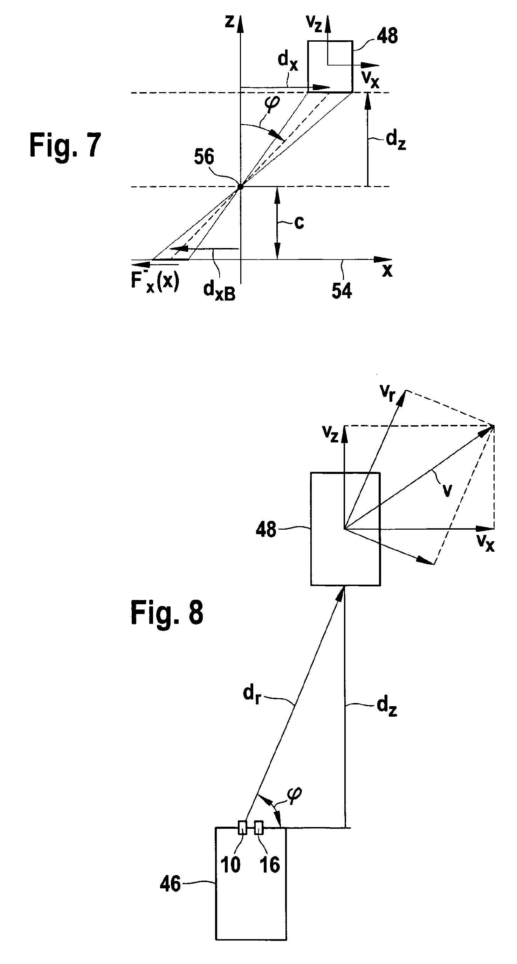

Mit Bezug auf Fig. 7 soll nun ein Verfahren erläutert werden, das es erlaubt, unter Nutzung des Mittelwertes des optischen Flusses innerhalb der Silhouette und unter Benutzung der bereits hergeleiteten time to collision $T_v$ die Bewegungsrichtung des Objektes im Raum zu bestimmen. Dadurch wird es einerseits möglich, eine tatsächlich bevorstehende Kollision von einer Vorbeifahrt zu unterscheiden, und zum anderen kann dann die anhand der longitudinalen Bewegung bestimmte time to collision $T_v$ in einen Wert $T_r$ für die time to collision umgerechnet werden, der die tatsächliche Radialbewegung des Objekts (in Richtung des Sehstrahls vom eigenen Fahrzeug zum Objekt) repräsentiert, wie sie auch vom Radarsensor 10 gemessen wird.

In Fig. 7 ist die Beziehung zwischen dem Objekt 48 und der Bildebene 54 sowie dem Brennpunkt 56 der Videokamera 16 in einer x-z-Ebene dargestellt. Die z-Achse entspricht der Längsachse des eigenen Fahrzeugs 46 und somit der optischen Achse der Kamera. Anhand dieses Diagramms soll erläutert werden, wie mit Hilfe der x-Komponente des optischen Flusses die x-Komponente $v_x$ der Geschwindigkeit des Objekts 48 bestimmt werden kann. Die Bestimmung der dazu senkrechten transversalen Geschwindigkeitskomponente $v_y$ verläuft analog.

Für den Zusammenhang zwischen der Objektposition $(d_x, d_z)$ im Raum und der Objektposition $d_{xB}$ im Bild gilt gemäß Fig. 7:

$$d_x/d_z = d_{xB}/c \qquad (15)$$

wobei c eine Kamerakonstante (Brennweite) ist. Es folgt:

$$d_{xB} = c * (d_x/d_z) \qquad (16)$$

Die laterale Objektgeschwindigkeit im Bild erhält man durch zeitliche Ableitung von Gleichung (16).

$$\dot{d}_{xB} = c * ((\dot{d}_x/d_z) - (d_x \cdot \dot{d}_z/d_z^2))$$
$$= c * ((v_x/d_z) - (v_z/d_z)(d_x/d_z)) \qquad (17)$$

Ersetzt man $v_z/d_z$ und $d_x/d_z$ durch die time to collision $T_v$ bzw. den Objektwinkel $\varphi$ so erhält man:

$$\dot{d}_{xB} = c * ((v_x/d_z) - (1/T_v) \cdot (d_x/d_z))$$
$$= c * ((v_x/d_z) - (\tan\varphi/T_v)) \qquad (18)$$

Der Mittelwert des optischen Flusses innerhalb einer Objektkontur beschreibt die Verschiebung des Objekts zwischen zwei aufeinanderfolgenden Videobildern. Damit gilt für die x-Richtung die Beziehung:

$$\bar{F}_x = \Delta t * \dot{d}_{xB} \qquad (19)$$

Setzt man Gleichung (19) in Gleichung (18) ein, so erhält man das Verhältnis der lateralen Objektgeschwindigkeit $v_x$ zum longitudinalen Objektabstand $d_z$:

$$(v_x/d_z) = (\bar{F}_x/c \Delta t) + (\tan\varphi / T_v) \qquad (20)$$

Für das Verhältnis der Geschwindigkeitskomponenten im Raum gilt somit:

$$(v_x/v_z) = (v_x/d_z) * (d_z/v_z)$$
$$= ((\bar{F}_x/c \Delta t) + (\tan\varphi / T_v)) * T_v$$
$$= (\bar{F}_x/c) * (T_v/\Delta t) + \tan\varphi \qquad (21)$$

Mit $T_v$ aus Gleichung (14) und $\tan k \varphi = d_{xB}/c$ läßt sich somit auch das Verhältnis $v_x/v_z$ und entsprechend das Verhältnis $v_y/v_z$ aus dem über die Objektsilhouette integrierten optischen Fluß mit hoher Genauigkeit berechnen. Dies ermöglicht neben der Bestimmung des Kollisionszeitpunktes, d.h., des Zeitpunktes, an dem das Objekt die Bildebene 54 erreicht, auch eine Aussage darüber, wo das Objekt die Bildebene treffen wird, so daß sich entscheiden läßt, ob es tatsächlich zu einer Kollision kommen wird oder das Objekt das Fahrzeug in gewissem seitlichen Abstand passiert.

Anhand der Daten des Radarsensors 10 kann auf unabhängige Weise ein zweiter Wert T für die time to collision ermittelt r werden, indem einfach der gemessene Abstand durch die gemessene Relativgeschwindigkeit dividiert wird. Eine etwas modifizierte Variante dieses Verfahrens wird in DE 10 2004 018 470 näher beschrieben.

Die beiden so erhaltenen Werte $T_v$ und $T_r$ für die time to collision sind jedoch in ihrer physikalischen Bedeutung nicht identisch. Während $T_v$ anhand der longitudinalen Bewegungen gewonnen wurde und somit durch das Verhältnis $d_z/v_z$ gegeben ist, wird $T_r$ anhand der Radialbewegung des Objekts gewonnen und ist somit durch das Verhältnis zwischen dem radialen Abstand $d_r$ des Objekts und der Radialkomponente $v_r$ der Geschwindigkeit gegeben. Für die vereinfachte Situation, daß sich der Radarsensor 10 und die Videokamera 16 auf gleicher Höhe befinden, ist der Zusammenhang zwischen den Größen $d_z$ und $d_r$ und den Komponenten $v_z$ und $v_r$ des Geschwindigkeitsvektors **v** in Fig. 8 dargestellt.

Zur Umrechnung von $T_v$ in $T_r = d_r/v_r$ benutzt man:

$$T_v = d_z/v_z \qquad (22)$$

$$T_r = d_r/v_r \qquad (23)$$

$$v_r = v_z \cos\varphi + v_x \sin\varphi \tag{24}$$

und folglich:

$$v_r/d_z = v_z/d_z \cos\varphi + v_x/d_z \sin\varphi \tag{25}$$

Gemäß Fig. 8 gilt $d_z = d_r \cos\varphi$ und somit:

$$v_r/d_z = v_r/(d_r \cos\varphi) \tag{26}$$

woraus folgt:

$$v_r/d_r = (v_r/d_z) \cos\varphi \tag{27}$$

Einsetzen von Gleichung (27) in Gleichung (23) und Einsetzen von Gleichungen (24), (22) und (20) liefert:

$$
\begin{aligned}
1/T_r &= v_r/d_r = (v_r/d_z) \cos\varphi \\
&= (v_z/d_z) \cos^2\varphi + (v_x/d_z) \sin\varphi \cos\varphi \\
&= (\cos^2\varphi/T_v) + ((\bar{F}_x/c \, \Delta t) + (\tan\varphi/T_v)) \sin\varphi \cos\varphi \\
&= (\cos^2\varphi/T_v) + (\sin^2\varphi/T_v) + (\bar{F}_x/c \, \Delta t) \sin\varphi \cos\varphi \\
&= 1/T_v + (\bar{F}_x/c \, \Delta t) \sin\varphi \cos\varphi
\end{aligned}
\tag{28}
$$

Damit erhält man schließlich:

$$T_r = ((1/T_v) + (\bar{F}_x/c \, \Delta t) \sin\varphi \cos\varphi)^{-1} \tag{29}$$

Mit dieser Identität ist es nun möglich, die auf unterschiedliche Weisen erhaltenen Werte $T_v$ und $T_r$ für die time to collision genau miteinander abzugleichen, erforderlichenfalls nach Korrektur um die Distanz $d_{rv}$ in Fig. 2.

**Patentansprüche**

1. Verfahren zur Schätzung der Relativbewegung von Video-Objekten in einem mit einem Videosystem ausgerüsteten Fahrerassistenzsystem für Kraftfahrzeuge (46), bei dem mindestens ein die Bewegung des Objekts (48) kennzeichnender Parameter ($T_v$) anhand der scheinbaren Bewegung des Objekts im Videobild berechnet wird, **dadurch gekennzeichnet, daß** der die Bewegung kennzeichnende Parameter ($T_v$) anhand des über die Fläche ($A_1$, $A_2$) des Objekts im Videobild integrierten optischen Flusses (F) berechnet wird.

**2.** Verfahren nach Anspruch 1, **dadurch gekennzeichnet, daß** der die Bewegung kennzeichnende Parameter die "time to collision" $T_v$ ist, d.h., die Zeit, die bei Annahme konstanter Geschwindigkeiten vergehen würde, bis der in Richtung der Längsachse des eigenen Fahrzeugs (46) gemessene Abstand des Objekts (48) auf 0 abgenommen hat.

**3.** Verfahren nach Anspruch 2, **dadurch gekennzeichnet, daß** aus der "time to collision" $T_v$ und dem Integral des optischen Flusses über die Fläche des Objekts das Verhältnis zwischen mindestens einer Transversalkomponente ($v_x$, $v_y$) der Geschwindigkeit des Objekts (48) zu der Longitudinalkomponente ($v_z$) dieser Geschwindigkeit berechnet wird.

**4.** Verfahren nach Anspruch 3, **dadurch gekennzeichnet, daß** anhand des Verhältnisses zwischen der transversalen und der longitudinalen Komponente der Geschwindigkeit des Objekts (48) die vektorielle Relativgeschwindigkeit des Objekts bestimmt und prädiziert wird, ob das Objekt tatsächlich mit dem eigenen Fahrzeug kollidieren wird.

**5.** Verfahren nach Anspruch 3 oder 4, **dadurch gekennzeichnet, daß** die "time to collision" $T_v$ mit Hilfe des Verhältnisses zwischen der Transversalkomponente und der Longitudinalkomponente der Geschwindigkeit in eine "time to collision" $T_r$ umgerechnet wird, die der Zeit entspricht, die unter der Annahme konstanter Geschwindigkeiten noch vergehen würde, bis der radiale Abstand ($d_r$) des Objekts (48) vom eigenen Fahrzeug (46) auf 0 abgenommen hat.

**6.** Verfahren nach Anspruch 5, **dadurch gekennzeichnet, daß** die time to collision $T_r$ unabhängig mit Hilfe eines Radarsensors (10) gemessen wird und das Meßergebnis mit der berechneten time to collision verglichen wird, um das vom Radarsensor geortete Objekt mit dem vom Videosystem georteten Objekt zu identifizieren.

**7.** Fahrerassistenzsystem mit einem Videosystem (16) und einem Datenverarbeitungssystem (18, 22), **dadurch gekennzeichnet, daß** in dem Datenverarbeitungssystem Mittel zur Durchführung des Verfahrens nach einem der Ansprüche 1 bis 6 implementiert sind.

## Claims

**1.** Method for estimating the relative movement of video objects in a driver assistance system, equipped with a video system, for motor vehicles (46), in which method at least one parameter ($T_v$) which characterizes the movement of the object (48) is calculated on the basis of the apparent movement of the object in the video image, **characterized in that** the parameter ($T_v$) which characterizes the movement is calculated on the basis of the optical flow (F) which is integrated over the area ($A_1$, $A_2$) of the object in the video image.

**2.** Method according to Claim 1, **characterized in that** the parameter which characterizes the movement is the "time to collision" $T_v$, i.e. the time which, assuming constant speeds, would pass until the distance from the object (48) measured in the direction of the longitudinal axis of the driver's own vehicle (46) has decreased to 0.

**3.** Method according to Claim 2, **characterized in that** the ratio between at least one transversal component ($v_x$, $v_y$) of the speed of the object (48) with respect to the longitudinal component ($v_z$) of this speed is calculated from the "time to collision" $T_v$ and the integral of the optical flow over the area of the object.

**4.** Method according to Claim 3, **characterized in that** the vectorial relative speed of the object is determined on the basis of the ratio between the transversal component and the longitudinal component of the speed of the object (48), and a prediction is made as to whether the object will actually collide with the driver's own vehicle.

**5.** Method according to Claim 3 or 4, **characterized in that** the "time to collision" $T_v$ is converted, using the ratio between the transversal component and the longitudinal component of the speed, into a "time to collision" $T_r$ which correspond to the time which, assuming constant speeds, would still pass until the radial distance ($d_r$) of the object (48) from the driver's own vehicle (46) has decreased to 0.

**6.** Method according to Claim 5, **characterized in that** the time to collision $T_r$ is measured independently using a radar sensor (10), and the measurement result is compared with the calculated time to collision in order to identify the object located by the radar sensor with the object located by the video system.

**7.** Driver assistance system having a video system (16) and a data processing system (18, 22), **characterized in that** means for carrying out the method according to one of Claims 1 to 6 are implemented in the data processing system.

**Revendications**

1. Procédé d'estimation de la vitesse relative d'objets vidéo dans un système d'assistance au conducteur de véhicules automobiles (46) équipé d'un système vidéo, dans lequel au moins un paramètre ($T_v$) qui caractérise le déplacement de l'objet (48) est calculé à l'aide du déplacement apparent de l'objet dans l'image vidéo,
   **caractérisé en ce que**
   le paramètre ($T_v$) qui caractérise le déplacement est calculé à l'aide du flux optique (F) intégré sur la superficie ($A_1$, $A_2$) de l'objet dans l'image vidéo.

2. Procédé selon la revendication 1, **caractérisé en ce que** le paramètre qui caractérise le déplacement est la durée jusqu'à collision $T_v$, c'est-à-dire le temps qui se serait écoulé dans l'hypothèse de vitesses constantes jusqu'à ce que la distance mesurée de l'objet (48) dans la direction de l'axe longitudinal du véhicule propre (46) soit descendue à 0.

3. Procédé selon la revendication 2, **caractérisé en ce que** le rapport entre au moins une composante transversale ($v_x$, $v_y$) de la vitesse de l'objet (48) et la composante longitudinale ($v_z$) de cette vitesse est calculé à partir de la durée jusqu'à collision $T_v$ et de l'intégrale du flux optique à travers la superficie de l'objet.

4. Procédé selon la revendication 3, **caractérisé en ce que** la vitesse vectorielle relative de l'objet est déterminée à l'aide du rapport entre la composante transversale et la composante longitudinale de la vitesse de l'objet (48) et **en ce que** le procédé prédit si l'objet entrera effectivement en collision avec le véhicule propre.

5. Procédé selon la revendication 3 ou 4, **caractérisé en ce que** la durée jusqu'à collision $T_v$ est recalculée à l'aide du rapport entre la composante transversale et la composante longitudinale de la vitesse en une durée jusqu'à collision $T_r$ qui correspond à la durée qui s'écoulerait encore dans l'hypothèse de vitesses constantes jusqu'à ce que la distance radiale ($d_r$) de l'objet (48) par rapport au véhicule propre (46) soit descendue à 0.

6. Procédé selon la revendication 5, **caractérisé en ce que** la durée jusqu'à collision $T_r$ est mesurée indépendamment à l'aide d'un détecteur radar (10) et le résultat de la mesure est comparé avec la durée jusqu'à collision calculée afin de conclure que l'objet localisé à l'aide du détecteur radar est identique à l'objet localisé à l'aide du système vidéo.

7. Système d'assistance au conducteur équipé d'un système vidéo (16) et d'un système de traitement de données (18, 22), **caractérisé en ce que** des moyens d'exécution du procédé selon l'une des revendications 1 à 6 sont mis en oeuvre dans le système de traitement de données.

EP 2 200 881 B1

**Fig. 1**

14

Fig. 2

Fig. 3

Fig. 4

Fig. 5

**Fig. 6**

U

$A_2$

$\underline{A_1}$

$h_2$   $h_1$   $F(x, y)$

$s_1$

$s_2$

$\left|F_x(x) - F_x^-(x)\right|$

$\overline{\left|F_x(x) - F_x^-(x)\right|}$

$\left|F_x(x) - F_x^-(x)\right|$

$4\overline{\left|F_x(x) - F_x^-(x)\right|}$

x

EP 2 200 881 B1

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004046360 A1
- WO 2005098782 A1
- DE 102004047475 A1
- DE 102007018470
- DE 102004046101 A1
- DE 10351778 A1
- DE 102005045017 A1
- DE 102004018470

**In der Beschreibung aufgeführte Nicht-Patentliteratur**

- **Berthold K.P. Horn ; Brian G. Schunck.** Determining Optical Flow'', Artificial Intelligence. *Band,* 1981, vol. 17 (1 - 3), 185-203